(19) Europäisches Patentamt / European Patent Office / Office européen des brevets

(11) **EP 2 472 287 A2**

(12) **DEMANDE DE BREVET EUROPEEN**

(43) Date de publication:
**04.07.2012 Bulletin 2012/27**

(51) Int Cl.:
**G01S 13/24** (2006.01)  **G01S 13/28** (2006.01)
**G01S 13/30** (2006.01)

(21) Numéro de dépôt: **11195502.7**

(22) Date de dépôt: **23.12.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.12.2010 FR 1005183**

(71) Demandeur: **Thales**
**92200 Neuilly Sur Seine (FR)**

(72) Inventeurs:
• **Bon, Nicolas**
**29200 BREST (FR)**
• **Quellec, Jean Michel**
**29810 PLOUMOGUER (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(54) **Procédé d'extension de la portée instrumentée d'un radar**

(57) La présente invention a pour objet un procédé d'émission réception radar comportant une étape d'émission cyclique d'un groupe d'impulsions de fréquence différente, chaque fréquence étant émise sur un canal différent et chaque cycle comprend une seule phase d'émission et une seule phase d'écoute et une étape de réception pendant laquelle les échos de chaque impulsion émise sont traités simultanément et en parallèle dans des canaux fréquentiels de réception différents.

L'invention a également pour objet un radar permettant de mettre en oeuvre le procédé d'émission réception.

FIG.3

EP 2 472 287 A2

**Description**

La présente invention se rapporte à un procédé d'émission-réception radar.

Un radar à impulsions agile en fréquence d'émission émet des impulsions avec une certaine période de répétition notée Tr et une certaine période de cycle Tc. L'agilité de la fréquence d'émission a un intérêt particulier, car elle permet de décorréler les signaux et ainsi d'avoir un meilleur comportement vis-à-vis des fluctuations de la surface équivalente radar.

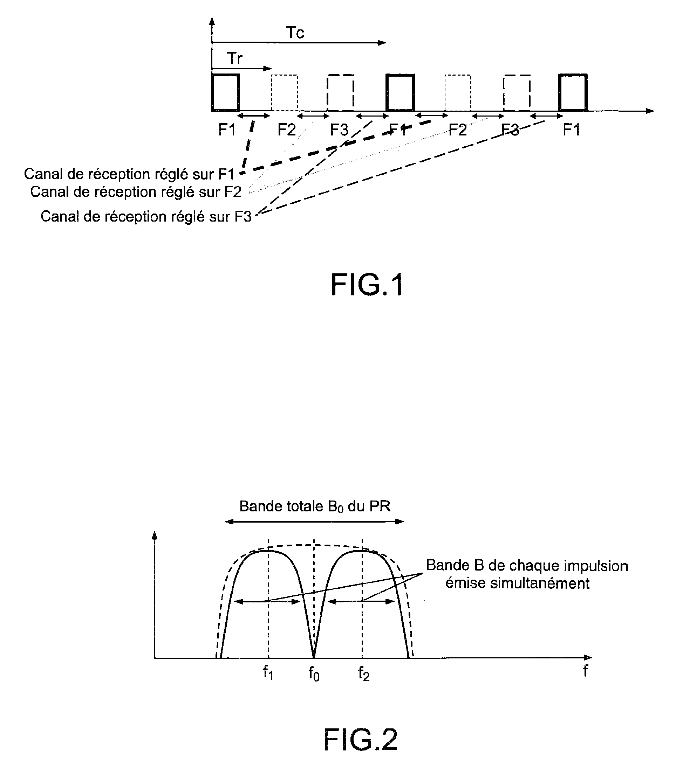

La distance ambiguë $D_a$ d'un radar correspond au temps minimum entre deux impulsions émises à la même fréquence. Dans le cas de la forme d'onde schématisée en figure 1, elle correspond à la période cycle $T_c$.

La portée instrumentée $D_i$ du radar correspond à la période de récurrence $T_r$. C'est la période pendant laquelle la réception est assurée sur le même canal fréquentiel que celui utilisé à l'émission ou période d'écoute.

Les deux distances citées ci-dessus sont données respectivement par :

$$D_a = \frac{cT_c}{2} \qquad \text{et} \qquad D_i = \frac{cT_r}{2}$$

où c est la vitesse de propagation des ondes utilisées dans le milieu d'intérêt. Le choix de la période de répétition est fait selon l'application que l'on souhaite donner à la forme d'onde du radar (détection à courte distance, longue distance, cibles marines, aériennes, mobiles, ...).

La période d'un cycle détermine aussi la vitesse maximale que le radar peut mesurer sans ambiguïté.

Un but de la présente invention est de proposer un procédé d'émission-réception radar permettant d'augmenter la distance instrumentée dudit radar, et plus particulièrement d'une forme d'onde à agilité de fréquence, tout en conservant la vitesse ambiguë et les avantages liés à l'agilité de fréquence, et d'étendre la zone de détection sans modifier le comportement des traitements vis-à-vis du Doppler des cibles et de leurs fluctuations.

A cet effet, l'invention a pour objet un procédé d'émission-réception radar comportant :

- une étape d'émission cyclique d'un groupe d'impulsions de fréquence différente, chaque fréquence étant émise dans un canal différent et chaque cycle comprend une seule phase d'émission et une seule phase d'écoute,
- et une étape de réception pendant laquelle les échos de chaque impulsion émise sont traités simultanément et en parallèle dans des canaux fréquentiels de réception différents.

Selon un premier aspect de l'invention, le procédé est caractérisé en ce que chacune des impulsions est émise simultanément, et en ce qu'à la réception, les échos des impulsions sont traitées simultanément et en parallèle dans des canaux fréquentiels correspondant à leur étalement spectral centré sur leur fréquence d'émission, chacun des échos étant sensiblement centré sur une fréquence d'émission différente.

Selon un autre aspect de l'invention, les impulsions de fréquences différentes sont émises les unes à la suite des autres afin d'éviter que l'émetteur ne produise des signaux parasites provenant d'interférences entre les différentes fréquences d'émission, et à la réception, les échos reçus des impulsions émises sont recalés temporellement aux différentes fréquences.

Selon une autre particularité de l'invention, les impulsions sont émises avec agilité de fréquence.

Un autre but de l'invention est de proposer un radar apte à mettre en oeuvre les procédés de l'invention.

A cet effet l'invention a pour objet un radar comprenant une antenne d'émission-réception, une voie d'émission et un canal de réception, ledit radar étant caractérisé en ce que :

la voie d'émission comporte un générateur d'impulsions, un premier mélangeur, un circulateur et un pilote de génération de canaux fréquentiels, ledit pilote générant plusieurs canaux fréquentiels simultanément,

le canal de réception comporte un second mélangeur relié audit pilote et à des dispositifs de traitement de signaux de réception et un dispositif de combinaison, le canal de réception comprenant au moins deux voies de traitement comportant chacune un filtre accordé sur une seule fréquence et un dispositif de traitement accordé à la fréquence du filtre correspondant, les sorties de ces voies de réception étant reliées à un dispositif de combinaison.

La présente invention sera mieux comprise à la lecture de la description détaillée d'un mode de réalisation, pris à titre d'exemple non limitatif et illustré par le dessin annexé, sur lequel :

- la figure 1, citée ci-dessus, est un chronogramme simplifié des impulsions émises par un radar à agilité de fréquence,
- la figure 2 est un diagramme fréquentiel d'un exemple d'enveloppe du spectre d'une impulsion de radar émise conformément à l'invention,
- la figure 3 est un chronogramme d'une forme d'onde classique de radar,
- la figure 4 est un chronogramme d'un exemple d'une forme d'onde émise par un radar conformément à un mode de mise en oeuvre du procédé de l'invention,
- la figure 5 est un chronogramme d'un exemple d'une forme d'onde émise par un radar conformément à un autre mode de mise en oeuvre du procédé de l'invention, et
- les figures 6 et 7 sont respectivement un schéma simplifié d'un radar classique et d'un exemple de réalisation d'un radar conforme à l'invention.

La présente invention est exposée en détail ci-dessous en référence à l'émission d'un train d'impulsions à deux fréquences, mais il est bien entendu qu'elle s'applique également aux cas de plus de deux fréquences.

Un radar impulsionnel émet des impulsions de forte puissance limitées dans le temps. De façon à augmenter leur bande passante, ces signaux peuvent être modulé avec une modulation de phase (par un code de phase) ou de fréquence (par une rampe de fréquence).

De façon préférentielle, une rampe de fréquence (ou chirp selon le terme anglo-saxon) est utilisée pour moduler linéairement les impulsions en fréquence, ce type de modulation permettant d'avoir un taux de compression beaucoup plus élevé.

Les impulsions émises par un radar peuvent donc être modulées en phase (par un code de phase) ou linéairement en fréquence (allure d'un *« chirp »*) Ces impulsions ont un spectre donné qui a une certaine largeur B qui va définir un canal à la réception. Cette bande fréquentielle B va également déterminer la résolution en distance Δr du radar telle que :

$$\Delta r = \frac{c}{2B}$$

La bande des impulsions d'un radar, et donc sa résolution en distance, est choisie suivant le mode radar (par exemple : résolution fine pour les modes d'imagerie radar ou de détection de petites cibles, résolution moins bonne pour des modes de détection de grosses cibles).

Le principe de l'invention consiste à utiliser un pilote récepteur (PR) permettant une bande globale $B_0$ plus grande que celle requise par l'application, et de le programmer pour émettre des impulsions constituées de la somme de N impulsions de bande B plus petite et qui ne se recouvrent pas fréquentiellement de manière à pouvoir séparer ces N impulsions par filtrage (ou à modifier un récepteur existant pour obtenir ces caractéristiques). Un exemple de représentation de l'enveloppe du spectre d'une impulsion émise avec ce principe est représentée en figure 2 pour N=2.

Dans un mode de réalisation préférentiel, la somme (N.B) des bandes élémentaires des impulsions, éventuellement modulées en fréquence (cf. chirp) ou en phase (cf. code de phase), est choisie de façon à ce qu'elle soit inférieure à la bande du PR (pilote récepteur) plus une certaine marge assurant que les spectres des impulsions ne se recouvrent pas et que la réjection des filtres de réception soit suffisante.

A la réception, N voies de réception (d'un point de vue matériel ou traitement) sont constituées, chacune adaptée à la réception des échos de chacune des impulsions élémentaires.

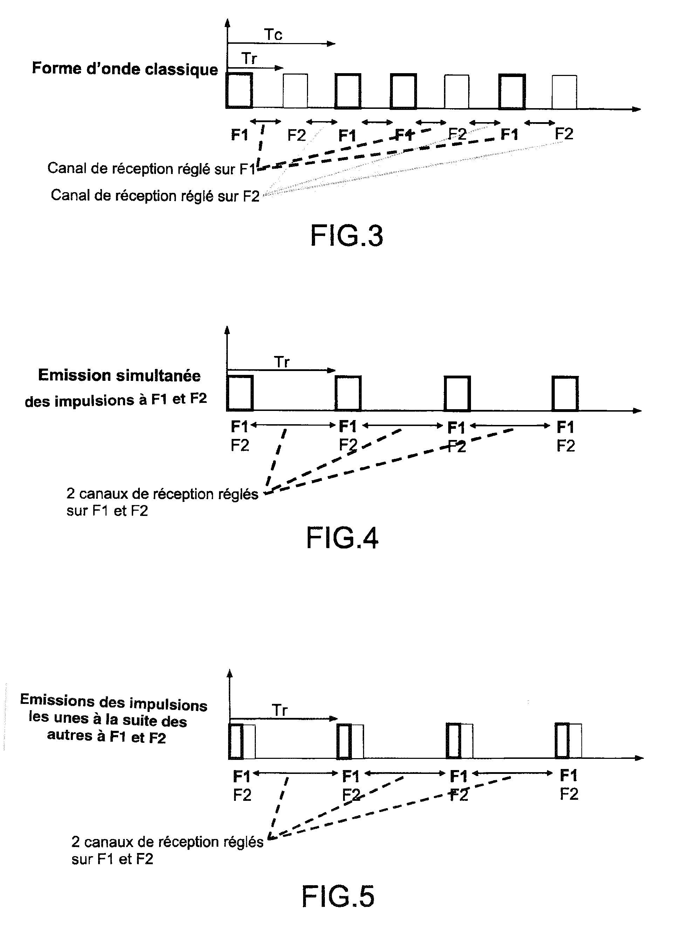

Les figures 3 et 4 illustrent des différences entre la forme d'onde obtenue selon l'invention (figure 4) et la forme d'onde classique (figure 3) dans le cas d'une agilité sur deux fréquences.

Dans le cas classique, les impulsions sont émises alternativement à la fréquence F1 et à la fréquence F2 par exemple suivant un cycle régulier ou suivant un cycle aléatoire comme illustré figure 4. Ainsi, chaque cycle d'émission réception de période de cycle Tc se compose d'autant de phase d'émission et de phase d'écoute que de fréquence à émettre.

De façon différente, selon l'invention, à chaque période Tr un groupe d'impulsions de fréquences différentes est émis, chaque fréquence étant émise dans un canal différent. Chaque cycle d'émission-réception de période Tr ne comprend qu'une seule phase d'émission et qu'une seule phase d'écoute. De façon avantageuse, cette configuration d'émission réception permet d'obtenir un période d'écoute plus grande par rapport à la configuration classique et permet donc d'augmenter la portée instrumentée du radar.

Comme on peut le constater, la solution de l'invention permet de conserver la même fréquence de cycle et donc la même vitesse ambiguë, et aussi de doubler la distance instrumentée.

D'un point de vue matériel, il peut être nécessaire d'émettre les impulsions de fréquences différentes les unes à la suite des autres afin d'éviter que l'émetteur ne produise des signaux parasites provenant d'interférences entre les différentes fréquences d'émission. La figure 5 illustre cet autre mode de mise en oeuvre du procédé d'émission réception selon l'invention. Dans ce cas, à la réception, un module de traitement se charge de recaler temporellement les échos reçus des impulsions émises aux différentes fréquences.

Dans ces deux modes de mise en oeuvre du procédé, durant l'étape de réception, les échos de chaque impulsion émise sont traités simultanément et en parallèle dans des canaux fréquentiels de réception différents.

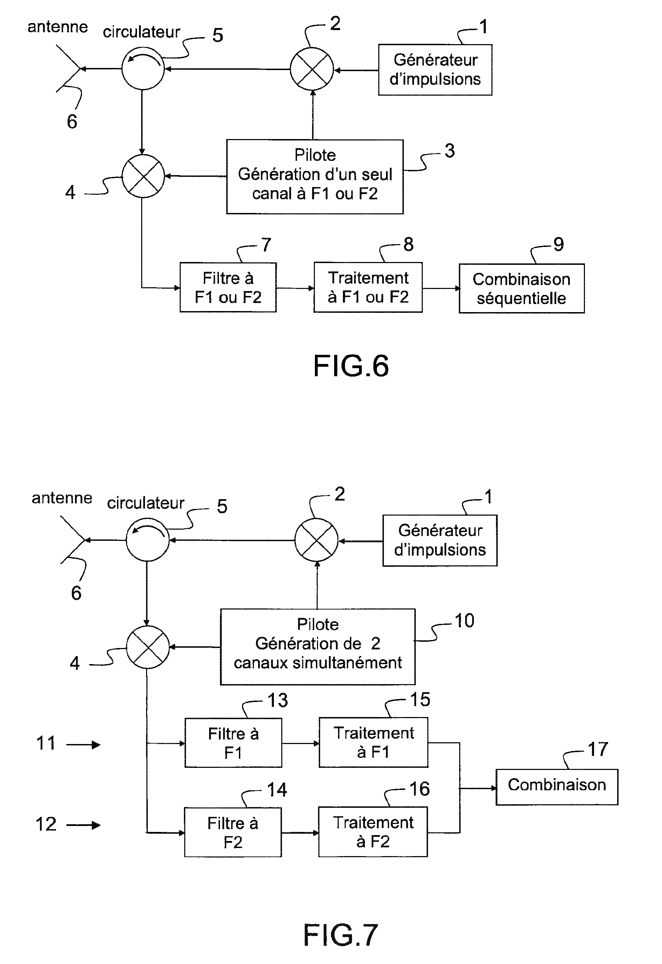

Les deux schémas synoptiques des figures 6 et 7 illustrent le principe du radar respectivement avec un seul canal de réception et deux canaux fréquentiels de réception.

Le radar de la figure 6 comporte essentiellement : un générateur d'impulsions 1 relié à un premier mélangeur 2 de voie d'émission recevant d'autre part d'un pilote 3 produisant séquentiellement des impulsions à la fréquence F1 puis F2. Ce pilote 3 est également relié à un deuxième mélangeur 4 de voie de réception. Les mélangeurs 2 et 4 sont reliés à un circulateur 5, lui-même relié à une antenne d'émission-réception 6. La sortie du mélangeur 4 est reliée à un filtre 7, fonctionnant également séquentiellement à F1 et F2, et suivi de circuits 8 de traitement à ces mêmes fréquences, reliés à un dispositif de combinaison séquentielle 9.

Sur le schéma de la figure 7 représentant un radar conforme à l'invention, les éléments similaires à ceux de la figure 6 sont affectés des mêmes références numériques que celles des éléments du schéma de la figure 6, à savoir les éléments 1, 2, 4, 5 et 6. La différence principale réside dans le fait que le pilote de génération d'impulsions, référencé 10, produit simultanément deux canaux, aux fréquences F1 et F2. Il en résulte que la sortie du mélangeur 4 est reliée à deux voies de traitement similaires 11 et 12 comportant chacune un filtre 13, 14 respectivement (à la fréquence F1 pour la voie 11 et F2 pour la voie 12) suivi d'un dispositif de traitement 15, 16 respectivement (à la fréquence F1 pour la voie 11 et F2 pour la voie 12). Les traitements effectués par les dispositifs 15 et 16 sont généralement des traitements de post-intégration bien connus de l'homme du métier. Les sorties des dispositifs 15 et 16 sont reliées à un dispositif de combinaison 17. Tous les circuits de la figure 7 étant de type connu en soi, leur adaptation pour l'invention, lorsqu'elle est nécessaire, est évidente pour l'homme du métier à la lecture de la présente description, et ne sera donc pas détaillée ici. De même, l'exemple de réalisation du radar a été présenté avec deux canaux de réception. Bien entendu, cet exemple n'est nullement limitatif et une généralisation à un nombre supérieur de canaux de réception, en fonction du nombre d'impulsions de fréquence différente émises, est possible.

## Revendications

**1.** Procédé d'émission-réception radar **caractérisé en ce qu'**il comporte :

   - une étape d'émission cyclique d'un groupe d'impulsions de fréquence différente, chaque fréquence étant émise dans un canal différent et chaque cycle comprend une seule phase d'émission et une seule phase d'écoute,
   - et une étape de réception pendant laquelle les échos de chaque impulsion émise sont traités simultanément et en parallèle dans des canaux fréquentiels de réception différents.

**2.** Procédé selon la revendication 1, **caractérisé en ce que** chacune des impulsions est émise simultanément, et **en ce qu'**à la réception, les échos des impulsions sont traitées simultanément et en parallèle dans des canaux fréquentiels correspondant à leur étalement spectral centré sur leur fréquence d'émission, chacun des échos étant sensiblement centré sur une fréquence d'émission différente.

**3.** Procédé selon la revendication 1, **caractérisé en ce que** les impulsions de fréquences différentes sont émises les unes à la suite des autres afin d'éviter que l'émetteur ne produise des signaux parasites provenant d'interférences entre les différentes fréquences d'émission, et **en ce qu'**à la réception, les échos reçus des impulsions émises sont recalés temporellement aux différentes fréquences.

**4.** Procédé selon la revendication 1, 2 ou 3, **caractérisé en ce que** les impulsions sont émises avec agilité de fréquence.

**5.** Radar apte à mettre en oeuvre le procédé selon une des revendications précédentes, comprenant une antenne d'émission-réception (6), une voie d'émission et un canal de réception, ledit radar étant **caractérisé en ce que** :

   - la voie d'émission comporte un générateur d'impulsions (1), un premier mélangeur (2), un circulateur (5) et un pilote de génération de canaux fréquentiels (10), ledit pilote (10) générant plusieurs canaux fréquentiels simultanément,
   - le canal de réception comporte un second mélangeur (4) relié audit pilote et à des dispositifs de traitement de signaux de réception (11, 12) et un dispositif de combinaison, le canal de réception comprenant au moins deux voies de traitement (11, 12) comportant chacune un filtre accordé sur une seule fréquence (13, 14) et un dispositif de traitement (15, 16) accordé à la fréquence du filtre correspondant, les sorties de ces voies de réception étant reliées à un dispositif de combinaison (17).

FIG.1

FIG.2

Forme d'onde classique

Tc

Tr

F1  F2  F1  F4  F2  F1  F2

Canal de réception réglé sur F1

Canal de réception réglé sur F2

# FIG.3

Emission simultanée
des impulsions à F1 et F2

Tr

F1  F1  F1  F1
F2  F2  F2  F2

2 canaux de réception réglés
sur F1 et F2

# FIG.4

Emissions des impulsions
les unes à la suite des
autres à F1 et F2

Tr

F1  F1  F1  F1
F2  F2  F2  F2

2 canaux de réception réglés
sur F1 et F2

# FIG.5

FIG.6

FIG.7